# EUROPEAN PATENT APPLICATION

(11) **EP 1 182 772 A2**
(43) Date of publication of application: **27.02.2002**
(21) Application number: 01119564.1
(22) Date of filing: 15.08.2001
(51) Int. Cl.: H02P 8/34

(54) **Control method and device for stepping motor and motor driver for stepping motor**

(30) Priority: 15.08.2000 JP 2000246222
(71) Applicant: Yamato Tape Co., Ltd., Tokyo (JP)
(72) Inventor: Matsuda, Toru, c/o Yamato Tape Co.,Ltd., Tokyo (JP); Tanaka, Kenichi, c/o Yamato Tape Co.,Ltd., Tokyo (JP)
(74) Representative: Patentanwälte Westphal, Mussgnug & Partner

(57) **Abstract**

Judgment, such as whether if the present rotation is normal, or whether if there is a risk of synchronicity loss, could be performed, and further, a most suitable control could be performed by detecting a change in drive current of a stepping motor, judging a load, and generating a signal.

A control device is comprised of: a driver 21 for generating a drive signal based on a command pulse given to a stepping motor 1 from a control portion 3; a electric current detection portion 22 for detecting drive current; a pulse signal transformation portion 23 for transforming the electric current detected at the electric current detection portion 22 into pulse signal; a control portion 3 for memorizing beforehand a control program in correspondence with information of a pulse width corresponding to the torque of the stepping motor, and the pulse width, measuring the width of the pulse signal transformed at the pulse signal transformation portion and comparing such width with the memorized pulse width, and generating a control signal corresponding to the pulse width.

## Description

### BACKGROUND OF THE INVENTION

### 1. Field of the Invention

This invention relates to a control method for a stepping motor, a control device for a stepping motor, and a motor driver for a stepping motor, which serves to control by detecting a change in drive current of the stepping motor and judging whether the stepping motor is rotating normally or whether if there is a risk of synchronicity loss, and further serves to detect load.

### 2. Description of Related Art

A stepping motor is compact but produces high torque and rotates precisely in a degree corresponding to the applied number of pulses. Accordingly, an open loop control could be performed and regardless of load, a rotation speed is determined depending on the number of pulse applied per unit of time.

Accordingly, since easy control could be performed and high precision could be guaranteed with use of a stepping motor, stepping motors are widely used, such as for, sheet feeding motors, carriage motors, or the like for office machinery such as printers and copiers; motors for limbs of small sized robots; angle control motors for fuel ejection valves of automobile engines; conveying motors for small sized conveyance machines.

However, when an excess load exceeding a certain amount is applied, a synchronicity loss would be created, in which rotation would cease and rotation control would not function. The synchronicity loss is a characteristic which an alternating current motor or a direct current motor does not have. Accordingly, a countermeasure for synchronicity loss would be necessary when using a stepping motor.

As for countermeasures for synchronicity loss, there are method such as, a method of selecting a stepping motor having sufficient room against the load applied upon a driving portion of a device for driving with the stepping motor (first method), a method of externally arranging a rotary sensor such as a rotary encoder for surveillance of the rotation of the stepping motor (second method), a method of detecting disorder of drive current (third method); and such methods are used selectively by taking into account factors such as degree of reliability upon the driving portion having respective purposes.

For example, when reliability is highly required, such as for an angle control motor for a fuel ejection valve of an automobile engine, the first method and/or the second method is selected. In terms of office machinery such as printers, the second method or the third method is selected.

With the first method, even if a stepping motor having sufficient room against the load applied upon a targeted driving portion, there is no guarantee of completely preventing synchronicity loss, and synchronicity loss may occur when an excessive load is applied upon due to reasons such as trouble at the driving side. Further, increase in cost or size increase would be inevitable by selecting a stepping motor being capable of enduring large excess load applied upon the targeted driving portion.

Since feedback control with an external rotary sensor is required for the second method, there would be a problem of being unable to perform open type control, which is an advantage of a stepping motor, and also a problem of an increase in cost amounting for the rotary sensor.

Although an increase in cost could be prevented with the third method, since this third method detects synchronicity loss after such synchronicity loss has occurred, problems such as being unable to guarantee precision for the targeted apparatus would be raised.

The object of this invention to provide a control method, a control device, and a motor driver for a stepping motor capable of judging, such as whether if the present rotation is normal, or whether if there is a risk of synchronicity loss, and further, performing a most suitable control by detecting a change in drive current of a stepping motor, judging a load, and generating a signal.

### SUMMARY OF THE INVENTION

Having performed various experiments for developing a more effective means using the characteristics of a stepping motor and having confirmed the movement when losing synchronicity, the present inventors have found for example that, the drive current of the stepping motor changes in proportion to the increase/decrease of load, that is, the torque would increase/decrease in proportion to the drive current, and that, synchronicity loss would occur when load has become no less than a certain amount.

Accordingly, by observing the drive current and detecting the change of drive current, it has been found that the change of load could be extracted, and that, synchronicity loss could be alerted when the load has reached near a certain value.

Consequently, for solving the aforementioned problems, a control method for a stepping motor regarding this invention detects a change in drive current for a stepping motor and generates a control signal in correspondence with the detected change.

Such control method for a stepping motor serves to observe the drive current of the stepping motor, detect the change of drive current, and generate a control signal corresponding to the detected change, such as a signal of the present torque value or a signal of whether if there is a risk of synchronicity loss, for controlling the drive of the stepping motor or for informing to an indication portion.

In respect of such control method, the detection of change in drive current for the stepping motor should preferably serve to transform the drive current of the stepping motor into electric voltage, transform such drive current into pulse signal by comparing with a standard electric voltage, and measure a width of the pulse signal; the signal generated in correspondence with the detected change should preferably be a control including at least one of the following, which are: ceasing the rotation of the stepping motor; adjusting the rotation speed of the stepping motor; informing of excess load; informing of synchronicity loss; or indicating of torque.

Further, since the change in drive current could be transformed into the change in the width of the pulse signal, the width of a pulse signal could easily be measured and the changes thereof could be recognized. Further, in correspondence to the measured width of the pulse signal, the control of the stepping motor could be performed where all or at least one of the following operations, which are cease of rotation, adjustment of rotation, informing of excess load, indicating of torque, are executed when a risk of synchronicity loss is recognized or when the possibility of synchronicity loss is heightened even though there is no immediate risk for the synchronicity loss; and further, when synchronicity loss is recognized, both or at least one of the following operations, which are cease of rotation or informing of synchronicity loss, are executed.

The control device for a stepping motor regarding this invention comprises an electric current detection portion for detecting drive current of a stepping motor; a pulse signal transformation portion for transforming an electric current detected at the electric current detection portion into a pulse signal; a control portion for memorizing beforehand a control program in correspondence with information of a pulse width corresponding to the torque of the stepping motor, and the pulse width, measuring the width of the pulse signal transformed at the pulse signal transformation portion and comparing such width with the memorized pulse width, and generating a control signal corresponding to the pulse width.

The control device for a stepping motor could detect the drive current of the stepping motor at the electrical current portion. The detected drive current could be transformed into pulse signal at the pulse signal transformation portion. For example, a pulse signal having a width corresponding to the size of the drive current could be created by detecting the drive current, comparing an electric current waveform corresponding to the detected drive current between the standard electric voltage, and outputting the portion higher than the standard electric voltage of the electric current waveform to high, and the portion lower than the standard electric voltage of the electric current waveform to low.

Further, the present value of the load applied upon the stepping motor could be revealed and a control signal (e.g. a control signal for ceasing rotation of stepping motor, a control signal for adjusting rotation speed of the stepping motor, a control signal for informing excess load, a control signal for indicating torque) corresponding to the pulse width (torque value) could be generated.

Further, the motor driver for a stepping motor regarding this invention comprises: an electric current detection portion for detecting a drive current of a stepping motor; and a pulse signal transformation portion for transforming an electric current detected at the electric current detection portion into a pulse signal; and has a function for generating a pulse signal corresponding to a load applied upon the stepping motor.

With such motor driver for a stepping motor, the stepping motor could be driven, and the drive current during rotation of the stepping motor could be transformed into pulse signal having a width corresponding to the size of the drive current and then outputted.

### BRIEF DESCRIPTION OF THE DRAWINGS

The above and other objects and features of the invention are apparent to those skilled in the art from the following preferred embodiments thereof when considered in conjunction with the accompanied drawings, in which:
FIG. 1 is an explanatory view showing a structure of a control device of a stepping motor for this embodiment being illustrated with blocks;
FIG.2 is a view showing a relation between a drive current and a pulse signal when a stepping motor is rotating normally;
FIG.3 is a view showing a relation between a drive current and a pulse signal when the torque load has increased;
FIG.4 is a view showing a relation between a drive current and a pulse signal when a stepping motor has lost synchronicity; and
FIG.5 is an explanatory view showing an example of a drive system of a stepping motor.

### DESCRIPTION OF THE PREFERRED EMBODIMENTS

A preferred embodiment of a control method, control device, motor driver for a stepping motor will be described hereinafter. The control method for a stepping motor regarding this invention is based on knowledge that: a torque of a stepping motor and a driving current would change relatively in proportion to each other; the torque changes in correspondence to the size of a load; and that a synchronicity loss would be created when a load reaches a prescribed amount being unendurable for the stepping motor; such control method detects and surveys the change of driving current and the value thereof, and further creates a control signal corresponding to the detected change and value while the stepping motor is driving, so as to enable any one or a plurality of the following operations such as: control for continuing the rotation of the stepping motor, for lowering the speed of rotation, for stopping rotation; informing the present state of the stepping motor; indicating the present value of the torque.

Although the change of driving current could be detected from a motor driver of the stepping motor when detecting the change thereof, it is preferable to obtain a pulse signal having a width corresponding to the size of the driving current by means of extracting the driving current from the motor and making into a waveform, separating such waveform to high and low in comparison with a standard electric voltage, and changing such waveform into a pulse signal being of a high voltage.

Accordingly, by changing the drive current of the stepping motor into a pulse signal, operation would become easy, would provide preferable information for precisely enabling various control.

Although there are various kinds regarding the content of the control corresponding to the detected change in driving current, it is preferable to include any one or a plurality of the following operations which are: stopping the rotation of the stepping motor; adjusting the rotation speed; informing the possibility of step-out; informing of step-out; and indicating of a torque. Nevertheless, the content of the control is not to be limited to the foregoing operations, and other operations could be applied as well.

Accordingly, the present running state of the stepping motor could be recognized and a suitable control corresponding to the recognized running state could be performed by previously studying such as the relation between the torque and the load applied upon the stepping motor, the torque and the width of a pulse, and the width of a pulse during step-out.

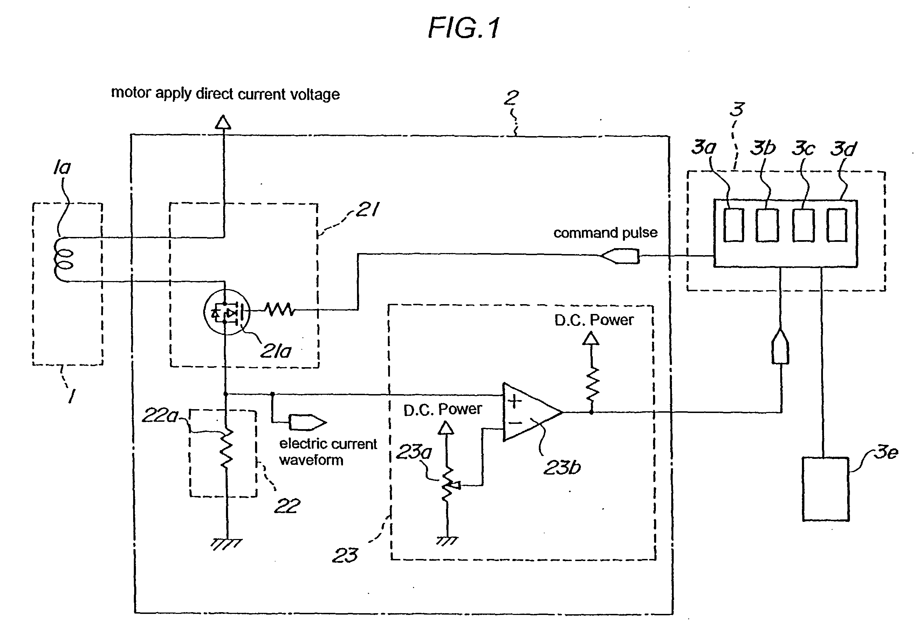

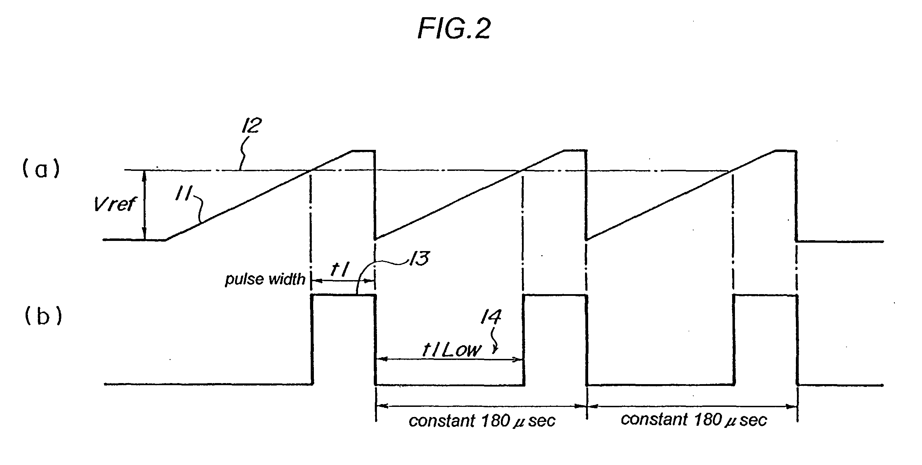

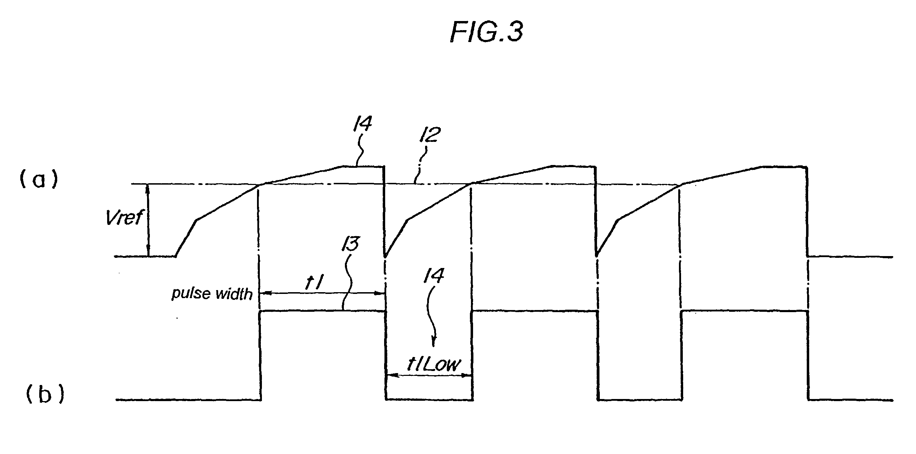

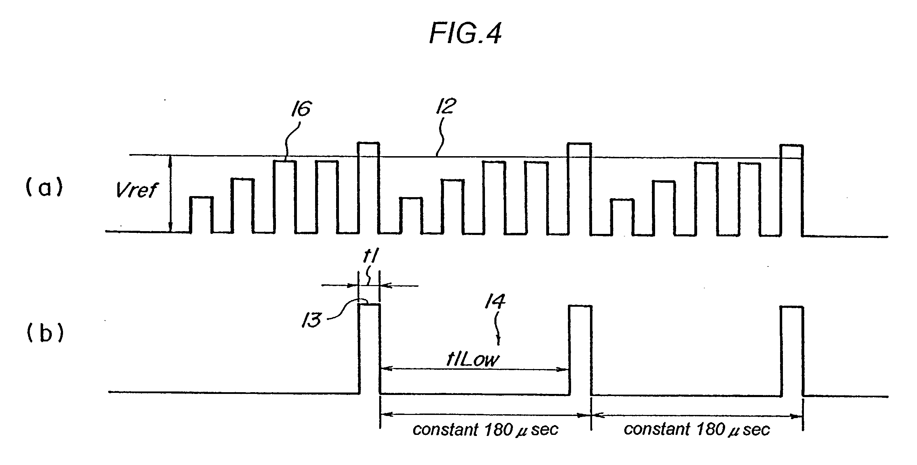

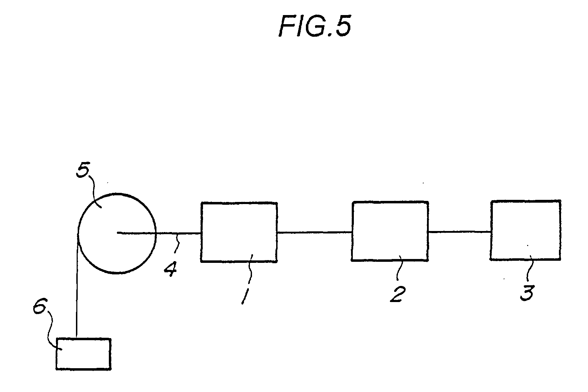

Next, a preferred embodiment of a control device for the stepping motor will be described with reference to the drawings, and further, a control method and structure of a motor driver will also be described. FIG. 1 is an explanatory block diagram showing a structure of a control device for a stepping motor regarding this embodiment. FIG.2 is a view showing the relation between a drive current and a pulse signal when the stepping motor is rotating normally. FIG.3 is a view showing the relation between a drive current and a pulse signal when the load of the torque has increased. FIG.4 is a view showing the relation between a drive current and a pulse signal when the stepping motor has stepped-out. FIG.5 is an explanatory view showing an example of a driving system for a stepping motor.

A structural example of a driving system for using a stepping motor will be described simply with reference to FIG.5. In the drawing, a motor driver 2 is connected to a stepping motor 1, and connected to the motor driver 2 is a control portion 3. A targeted drive body 5 is mechanically connected to an output axis 4 of a stepping motor 1, and connected to the targeted drive body 5 is a load 6.

There are to be no restrictions regarding the targeted drive body 5 and the load 6; an object conventionally being subject for driving by a stepping motor could be used, for example, a sheet feeding pulley or a carriage for an office apparatus; a limb portion for a small sized robot; or a fuel ejecting valve of an automobile engine.

There are to be no restrictions regarding the structure of a conduction system for sending driving force by connecting the output axis 4 with the targeted drive body 5; a most suitable driving system corresponding to a targeted portion could be selected.

When the load 6 does not change, the torque of the stepping motor 1 is relatively stable, and does not change. However, when the load 6 is actively changed, or when the load 6 is changed by an unexpected reason, the drive current of the stepping motor 1 changes in correspondence with the change of the load 6. In such case, it has been confirmed that the change of drive current is in proportion to the change of the load 6; based on such information, the drive current could be detected and the load 6 could be obtained from the detected value.

Next, a structure of a control device for a stepping motor will be described in detail with reference to FIG. 1. Although the stepping motor 1 normally have motor coils of 2 through 4 phases and is arranged with a driver for applying a direct current to each coil, the coils are representatively illustrated with a coil 1a of a single phase and a driver 21a in the drawing.

The motor driver 2 is comprised of: a driver portion 21 being a normal stepping motor driver for a stepping motor; an electric current detection portion 22 for detecting the drive current applied upon the coil 1a of the stepping motor 1 and outputting the detected drive current into an electrical current waveform; a pulse signal transformation portion 23 for comparing the detected electrical current waveform with a standard electric voltage and transforming the detected electrical current waveform into a pulse signal in correspondence with the electric current waveform of the drive current.

The driver portion 21 includes a driver 21a arranged in a number corresponding to a number of phase(s) of the stepping motor 1 (number of coil 1a), and transmits a motor apply direct current voltage upon the coil 1a in correspondence with the time of a commanding pulse generated from the control section 3. This driver portion 21 uses a normal stepping motor driver for a stepping motor.

The electric current detection portion 22 has a function for detecting an electrical current flowing in accordance with the applying of direct current voltage upon the coil 1a from the driver portion 21, and is comprised of a current detection resistance 22a. Continuing the detection of electrical current enables detection of current waveform.

The pulse signal transformation portion 23 has a function of comparing the electric current waveform detected by the electric current detection portion 22 to a standard electric voltage and transforming the waveform into pulse signal. Accordingly, the pulse signal transformation portion 23 is comprised of a standard electric voltage setting apparatus 23a for setting a standard electric voltage with a prescribed electric voltage, and a comparative amplification apparatus 23b for comparing the electric current waveform from the electric current detection portion 22 to the standard electric voltage from the standard electric voltage setting apparatus 23a.

The standard electric voltage setting apparatus 23a is structured as a variable resistance apparatus, in which output of a standard electric voltage having a prescribed value is possible by operating the variable resistance apparatus. Further, the comparative amplification apparatus 23b outputs a high signal being a portion of the electric current waveform higher than the standard electric voltage, outputs a low signal being a portion of the electric current waveform lower than the standard electric voltage, and forms a pulse signal with the high signal.

Therefore, the pulse signal formed from the pulse signal transformation portion 23 has a width in proportion to the size of the electric current applied upon the coil 1a of the stepping motor 1. The formed pulse signal is transmitted to the control portion 3.

The control portion 3 memorizes a torque value corresponding to the size of the load 6 applied upon the stepping motor 1, and information of a pulse width corresponding to the electric current during the generation of the torque, and also memorizes the content for control corresponding to the pulse width, such control portion 3 comprises: a memory portion 3a for memorizing a driving program or a control program for the stepping motor 1; a primary memory portion 3b for primarily memorizing the pulse signal width transmitted from the pulse signal transformation portion 23; a comparative judgment portion 3c for comparing the pulse signal transmitted from the pulse signal transformation portion 23 between the information of pulse width memorized by the memory portion 3a and for judging the content of a corresponding control; a command generating portion 3d for generating a control signal resulting from the judgment of the comparative judgment portion 3c and for generating a motor driver 2 bound command pulse corresponding to a preset driving program based on a driving command for a stepping motor 1; and an indication portion 3e for informing a state of the stepping motor 1 in accordance with the control program or for indicating the torque for the stepping motor 1.

Accordingly, when driving the system shown in FIG. 5, in a case where an operation start command is given to the control portion 3, a command pulse is generated at the control portion 3 for the motor driver 2 of the stepping motor 1 in accordance with the driving program. Based on the command pulse, a direct current electric voltage is applied to the stepping motor 1 from the driver portion 21 and a drive current flows in correspondence with the load 6. Consequently, the stepping motor 1 is capable of rotating to a degree corresponding to the total of the pulse generated for a unit of time in a prescribed direction and capable of driving the load 6.

The rotating state of the stepping motor is recognized by means as the following, in which the indication portion 3e enables the indication of a state, information, or torque value based on the present rotating state of the stepping motor 1 (in other words, whether if rotating as normal, whether if just before synchronicity loss, or whether if there is a synchronicity loss).

Next, a process of judging the state of the stepping motor 1 or judging the torque with the thus structured control device will be described.

The drive current of the stepping motor 1 does not start simultaneously with the generation of the command pulse and does not instantaneously reach to a prescribed electric current value, but instead, begins a flow of electric current when a direct current electric voltage is applied simultaneously with the generation of the command pulse. Afterwards, the electric current value would increase in accordance with the size of the load, and the stepping motor 1 would rotate at a degree corresponding to the command pulse and would then cease. Accordingly, the stepping motor 1 would consecutively rotate by a consecutive generation of the command pulse.

Accordingly, the drive current would start from a 0 state and increase to a maximum value in a course of time, and after maintaining the maximum value, the drive current would then return back to the 0 state, so as to form a waveform (electric current waveform). The electric current waveform is formed as electric voltage waveform owing to the drive current detected by the electric current detection portion 22 of the motor driver 2, which changes with the passage of time (hereinafter referred to as "electric current waveform").

The command pulse width is set in correspondence with the rotation speed of the stepping motor 1 being set beforehand, and is not set unambiguously. For example, in this embodiment, the rotation count is 10 rotations per minute (10 r.p.m.), and the command pulse width is set to 180 µ sec. for achieving such rotation count.

When the size of the load 6 is changed, the value of the torque necessary for driving the load 6 would change. The drive current changes along with the change of the torque, and is outputted as the change of pulse signal width outputted by the pulse signal transformation portion 23.

When transforming the electric current waveform into a pulse signal, the standard electric voltage setting apparatus of the pulse signal transformation portion 23 is selected in accordance to circumstance, and then, a most suitable standard electric voltage corresponding to the stepping motor 1 is selected, and then, entry upon the comparative amplification apparatus 23b is performed, so as to compare the electric current waveform. After comparison between the electric current waveform and the standard electric voltage, when the electric current waveform is higher than the standard electric voltage, a high signal is outputted, and when the electric current waveform is lower than the standard electric voltage, a low signal is outputted.

FIG.2 (a) shows a relation between the electric current waveform 11 when the value of the load 6 applied upon the stepping motor 1 is appropriate and the standard electric voltage 12, and FIG.2 (b) shows a transformed pulse signal 13 after comparing the electric current waveform 11 with the standard electric voltage. As shown in the drawing, the electric current waveform 11 straightly rises upward from 0 and exceeds the standard electric voltage 12, and then after maintaining a maximum electric current value, returns back to 0. In such process, the portion exceeding the standard electric voltage 12 is outputted as the pulse signal 13.

In this case, the width of the pulse signal 13 would be t1, and the width of the low signal 14, which is the portion where the width of the pulse signal is subtracted from the width of the command pulse 180 µ sec., would be t1 low.

In FIG.3, a relation between an electric current waveform 15 in a state where the load is increased just before a synchronicity loss, and the standard electric voltage 12 (FIG.3 (a)); and a relation between the pulse signal 13 and the low signal 14 (FIG.13 (b)) are shown. As shown in the drawing, in a state where the load is increased, the electric current waveform 15 rises rapidly from 0 and reaches the maximum electric current value, and then, after maintaining a maximum electric current value, returns back to 0. Accordingly, the electric current waveform 15 would be a straight line or curved lined protruding upward, and in this process, the portion exceeding the standard electric voltage 12 is outputted as the pulse signal 13 for the width t1, and the low signal 14 would be the portion where t1 is subtracted from the command pulse width.

In FIG.4, a relation between an electric current waveform 15 in a state where the load is further increased and where synchronicity is lost, and the standard electric voltage 12 (FIG.4 (a)), and a relation between the pulse signal 13 and the low signal 14 (FIG. 14 (b)) are shown. In the drawing, when the stepping motor 1 has lost synchronicity, the electric current waveform is transformed in a pulse manner having an extremely small width; among such pulse portion, the portion exceeding the standard electric voltage 12 is outputted as the pulse signal 13 for the width t1, and the low signal 14 would be the portion where t1 is subtracted from the command pulse width.

The relation between the foregoing electric current waveform 11, 15, 16 and the rotating state of the stepping motor 1 would differ depending on such as an output rating of the stepping motor 1, a torque, a drive current value, and it would be necessary to examine such factors beforehand for each stepping motor 1 subject for use.

By making a chart (see chart 1 ,chart 2) for knowing whether if the rotating state of the stepping motor 1 corresponding to the width of the pulse signal 13 and the width of the low signal 14 is normal, whether if there is a risk in the synchronicity loss, whether if synchronicity is lost, or what the value of the torque is, and by memorizing such factors upon the memory portion 3a of the control portion 3, the present rotation state of the stepping motor 1 or the torque could be recognized, based on the electric current waveform obtained by detection of the drive current applied upon the present stepping motor 1.

Further, by making beforehand a judgment principle based on results of experiments or the like regarding the change of load for the stepping motor 1, the change of rotation corresponding to such change of load, the movement during synchronicity loss, whether if there is a risk of synchronicity loss could be judged and informed.

Through experiments, the present inventor has studied a relation between the rotation state of the stepping motor 1 and the width of the pulse signal 13 and the low signal 14; and the relation between a torque and the width of the pulse signal 13, and made a judgment principle for the stepping motor 1 based on the result of the experiments. The results are shown in Chart 1, and Chart 2, and the judgment principle is shown in Chart 3. It should now be noted that Chart 1 shows the relation between the rotation state of the stepping motor 1 and the width of the pulse signal 13 and the low signal 14; and Chart 2 shows the relation between a torque and the width of the pulse signal 13.

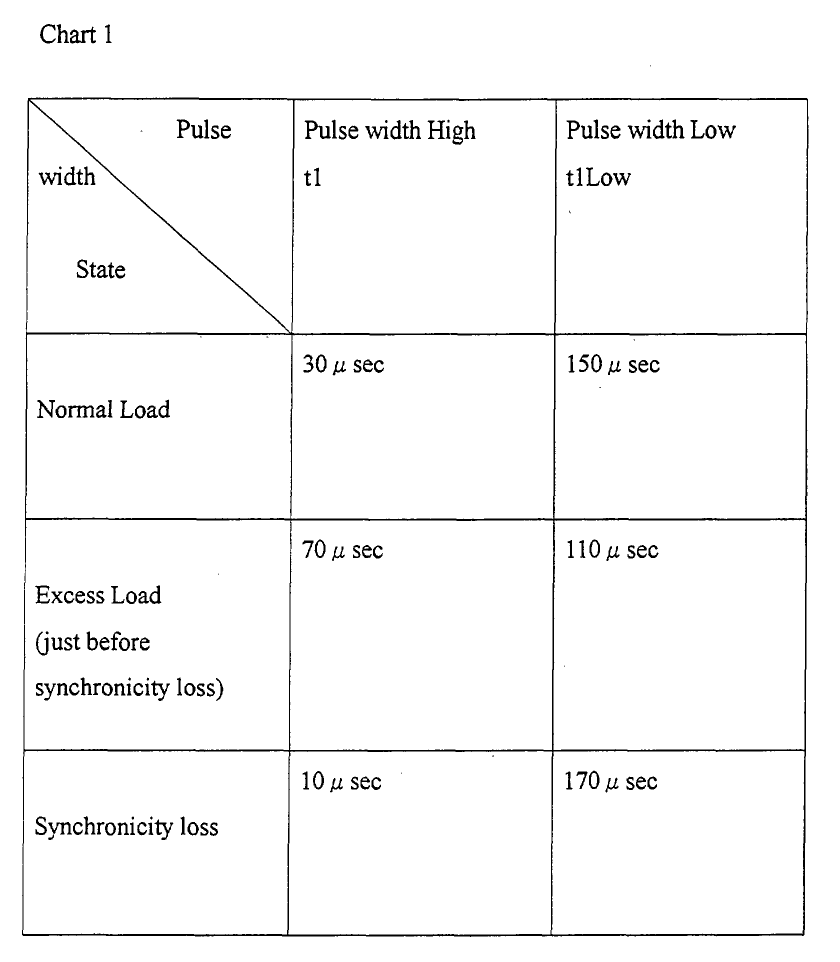

As shown in Chart 1, when the width of the pulse signal 13 is 30 µ sec., and the width of the low signal 14 is 150 µ sec., the stepping motor 1 is of a steady normal rotation state; when the width of the pulse signal 13 is 70 µ sec., and the width of the low signal 14 is 110 µ sec., the stepping motor 1 is of a rotation state highly probable of being a state just before synchronicity loss; and when the width of the pulse signal 13 is 10 µ sec., and the width of the low signal 14 is 170 µ sec., the stepping motor 1 is of a state of losing synchronicity.

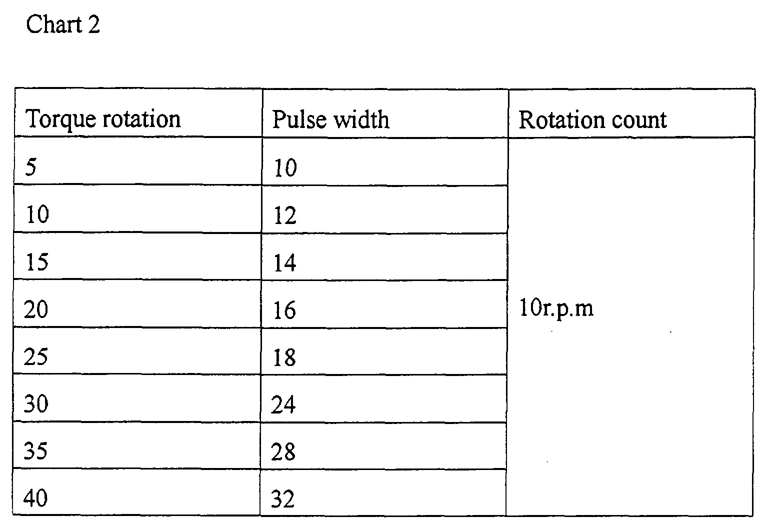

In Chart 2, since the torque would change in correspondence with the change in the rotation count of the stepping motor, the torque and the width of the pulse signal 13 have been measured in a state where the rotation count is maintained to 10r.p.m.

As shown in FIG.2, the torque of the stepping motor 1 is relatively in proportion to the width of the pulse signal 13, and by measuring the width of the pulse signal 13 from the electric current waveform of the drive current, the torque could be extracted. Further, since the rotation count of the stepping motor 1 could be defined, the value of the load could be calculated. In other words, indication of torque, which is one of the aims for this invention, could be achieved.

| Chart 3 | | |
|---|---|---|
| State | Condition for t1 | Condition for t1Low |
| Normal | 70 µ sec or less | 170 µ sec or less |
| Just before synchronicity loss | 70 µ sec or more | 170 µ sec or less |
| Synchronicity loss | 10 µ sec or less | 170 µ sec or more |

Chart 3 shows a principle for judging the rotation state of the stepping motor 1, which is one of the aims for control regarding the stepping motor 1, based on the results of Chart 1.

In other words, based on Chart 1, since the width of the pulse signal 13 is 70 µ sec. when the stepping motor 1 is in a state just before synchronicity loss and since the width of the low signal 14 is 170 µ sec. when in a state where synchronicity is lost, the stepping motor 1 could be judged as rotating normally if the detected width of the pulse signal 13 is 70 µ sec. or less and if the width of the low signal 14 is 170 µ sec. or less; further, the stepping motor 1 could be judged as having lost synchronicity if the width of the pulse signal 13 is 10 µ sec. or less and if the width of the low signal 14 is 170 µ sec. or more.

More particularly, the width of the pulse signal 13 is 10 µ sec. when the stepping motor 1 is in a state where synchronicity is lost, and is included in the normal rotation state where the width of the pulse signal 13 is ranged at 70 µ sec. Accordingly, since a precise judgment could not be achieved just by measuring the width of the pulse signal 13, the width of the pulse 13 and the width of the low signal 14 is measured simultaneously (170 µ sec. or more when synchronicity is lost, 170 µ sec. or less when normal) so that each state could be judged precisely.

Therefore, the rotation state of the stepping motor 1 could be judged or the value of the torque applied upon the stepping motor 1 could be judged, by requiring the memory portion 3a of the control portion 3 to memorize the content of the Chart 1 through Chart 3 beforehand, transmitting the actual detected pulse signal 13 and the low signal 14 during rotation of the stepping motor 1 to the control portion 3, and depending on the width of the pulse signal 13 and the low signal 14 at the comparative judgment portion 3c.

Next, the content of control associating with the judgment of the rotation state for the stepping motor 1 will be explained.

As described above, when the rotation state of the stepping motor 1 is judged at the comparative judgment portion 3c, in correspondence with the judged rotation state, there is a case where the rotation state continues to remain, and also a case where a change in rotation state is required. For example, it would be preferable to remain the rotation state when the stepping motor I is rotating normally.

More particularly, when the stepping motor 1 is judged as in a state just before synchronicity loss,the command torque is controlled to reduce rotation speed for increasing the value of the torque for responding to the load, or controlled to cease rotation, further, such state is indicated at the indication portion 3e or informed by other indicating means such as a patlite or a buzzer.

Further, when the stepping motor 1 is already in a state where synchronicity is lost, the command torque is ceased and such state is indicated at the indication portion 3e, or informed by other indicating means such as a pat lite or a buzzer.

The content of the foregoing control is written upon a control program having been memorized inside of the memory portion 3a of the control portion 3, and based on the judgment results from the comparative judgment portion 3c, a most suitable control command is created at the command creation portion 3d and control of the command pulse is performed along with indication or informing to the indication portion 3e.

By structuring the control device of the stepping motor as described above, in a case where the stepping motor 1 of the system in FIG. 5 is rotated and the load 6 is driven, the stepping motor 1 detects drive current and transform the drive current into pulse signal, and by measuring the width of the pulse signal, the rotation state of the stepping motor 1 could be judged, control could be performed in accordance with the judged rotation state, indication or informing of such state could be performed or indication of the torque could be performed.

Further, by forming the motor driver 2 being a united body comprised of the driver portion 21, the electric current detection portion 22, and the pulse signal transformation portion 23, and by selecting such motor driver, a stepping motor capable of easily judging a rotation state could be structured regardless of the stepping motor 1.

As above explained in detail, this invention regarding the control method for a stepping motor enables detection of a drive current for a stepping motor so as to perform the most suitable control, control regarding the value of the torque or the risk of synchronicity loss, and enables indication upon the indication portion. Accordingly, synchronicity loss for the stepping motor could be prevented.

Further, since the change in drive current could be transformed into the change in the width of the pulse signal, the width of a pulse signal could easily be measured and the changes thereof could be recognized by, transforming the drive current of the stepping motor into electric voltage, transforming the drive current into pulse signal by comparing the drive current with the standard electric voltage and measuring the width of the pulse signal, and setting the aim of control to at least one of the following which are, ceasing rotation of the stepping motor, adjusting the rotation speed of the stepping motor, informing excess of load, informing synchronicity loss, or indicating of the torque; further, in correspondence to the measured width of the pulse signal, the control of the stepping motor could be performed where all or at least one of the following operations, which are cease of rotation, adjustment of rotation, informing of excess load, indicating of torque, are executed when a risk of synchronicity loss is recognized or when the possibility of synchronicity loss is heightened even though there is no immediate risk for the synchronicity loss; and further, when synchronicity loss is recognized, both or at least one of the following operations, which are cease of rotation or informing of synchronicity loss, are executed.

Further, in respect of the control device for this invention, the load applied upon the present stepping motor could be extracted by the detected drive current, and owing to the control signal generated in correspondence with the width of the pulse signal, a most suitable control for the rotation state could be performed.

Further, since the motor driver for this invention is comprised of a electric current detection portion, a pulse signal transformation portion, and a regular driver for the stepping motor, the motor driver could drive the stepping motor, and also transform the drive current into pulse signal and output thus signal.

The foregoing description of a preferred embodiment of the invention has been presented for purposes of illustration and description, and is not intended to be exhaustive or to limit the invention to the precise form disclosed. The description was selected to best explain the principles of the invention and their practical application to enable others skilled in the art to best utilize the invention in various embodiments and various modifications as are suited to the particular use contemplated. It is intended that the scope of the invention not be limited by the specification, but be defined by the claims set forth below.

## Claims

1. A control method for a stepping motor comprising the steps of:
detecting a change in drive current for a stepping motor; and
generating a control signal in correspondence with a detected change.

2. The control method for a stepping motor according to claim 1, wherein the detection of change of drive current for the stepping motor serves to transform the drive current of the stepping motor into electric voltage, transform such drive current into pulse signal by comparing with a standard electric voltage, and measure the width of the pulse signal.

3. The control method for a stepping motor according to claim 1 or claim 2, wherein the signal generated in correspondence with the detected change serves as a control including at least one of the following, which are: ceasing the rotation of the stepping motor; adjusting the rotation speed of the stepping motor; informing of excess load; informing of synchronicity loss; or indicating of torque.

4. A control device for a stepping motor comprising:
an electric current detection portion for detecting drive current of a stepping motor;
a pulse signal transformation portion for transforming an electric current detected at the electric current detection portion into a pulse signal;
a control portion for
memorizing beforehand a control program in correspondence with information of a pulse width corresponding to the torque of the stepping motor and the pulse width,
measuring the width of the pulse signal transformed at the pulse signal transformation portion and comparing such width with the memorized pulse width, and
generating a control signal corresponding to the pulse width.

5. A motor driver for a stepping motor comprising:
an electric current detection portion for detecting a drive current of a stepping motor; and
a pulse signal transformation portion for transforming an electric current detected at the electric current detection portion into a pulse signal;
and having a function for generating a pulse signal corresponding to a load applied upon the stepping motor.
